# EUROPEAN PATENT APPLICATION

(11) **EP 3 663 957 A1**
(43) Date of publication of application: **10.06.2020**
(21) Application number: 18209906.9
(22) Date of filing: 03.12.2018
(51) Int. Cl.: G06F 21/74, G06F 21/78

(54) **REMOTE ENFORCEMENT OF DEVICE MEMORY**

(71) Applicant: Nagravision S.A., 1033 Cheseaux-sur-Lausanne (CH)
(72) Inventor: GREMAUD, Fabien, 1033 Cheseaux-sur -Lausanne (CH); FUCHS, Pascal, 1033 Cheseaux-sur -Lausanne (CH); VILLEGAS, Karine, 1033 Cheseaux-sur -Lausanne (CH); PERRINE, Jérôme, 1033 Cheseaux-sur -Lausanne (CH); HAUTIER, Roan, 1033 Cheseaux-sur -Lausanne (CH)
(74) Representative: Hoyng Rokh Monegier LLP

(57) **Abstract**

A method for anti-replay protection of a memory of a device, wherein the memory is used by and external to a secure element of the device, the method comprising the following steps, wherein the steps are performed in the device after a content of the memory is modified: generating device state data indicative of a state of the content of the memory; transmitting the device state data to a remote system for updating an authentication key of the device stored in a data storage of the remote system and for use by the remote system in an authentication procedure; and providing authentication information based on the device state data from the secure element to the remote system in the authentication procedure between the device and the remote system to verify a validity of the content of the memory.

## Description

### TECHNICAL FIELD

The present disclosure relates to a computer-implemented method for anti-replay protection of a memory of a device, a device for carrying out a computer-implemented method for anti-replay protection of a memory of a device, a remote system for carrying out a computer-implemented method for anti-replay protection of a memory of a device, a computer program product, and a computer-readable non-transitory storage medium.

### BACKGROUND ART

An IoT network is a network of physical devices, appliances, or items embedded in electronics or software, which enables these objects to exchange data without human interaction. Recommendation ITU-T Y.2060 defines the IoT as a global infrastructure for the information society, enabling advanced services by interconnecting physical and virtual things based on existing and evolving interoperable information and communication technologies. A 'thing' in the terminology 'IoT' is considered an object of the physical world - physical things - or the information world - virtual things - which is capable of being identified and integrated into communication networks. In this definition, physical things exist in the physical world and are capable of being sensed, actuated and connected. Examples of physical things include the surrounding environment, industrial robots, goods and electrical equipment. In this definition, virtual things exist in the information world and are capable of being stored, processed and accessed. Examples of virtual things include multimedia content and application software.

In ITU-T Y.2060, an IoT device is considered as a piece of equipment with the mandatory capabilities of communication and the optional capabilities of sensing, actuation, data capture, data storage and/or data processing. IoT devices typically communicate with other devices: they may communicate through the communication network via a gateway, through the communication network without a gateway, or directly without using the communication network. Also, combinations of communication scenarios are possible; for example, devices may communicate with other devices using direct communication through a local network, i.e., a network providing local connectivity between devices and between devices and a gateway, such as an ad-hoc network, and then communication through the communication network via a local network gateway.

The communication networks may transfer data captured by IoT devices to applications and other devices, as well as instructions from applications to devices. The communication networks typically provide capabilities for reliable and efficient data transfer. The IoT network infrastructure may be realized via existing networks, such as conventional TCP/IP-based networks, and/or evolving networks, such as next generation networks (NGN).

IoT devices may be built around an integrated circuit, e.g. in the form of a system on a chip (SoC). Such SoC may include a Root-of-Trust (RoT), which is a set of functions always trusted by the device and provided hardware-based so as to provide strong protection for the credentials and software of devices. A RoT is typically implemented in an integrated Secure Element. It is possible that the RoT is not embedded into the SoC of the device and implemented in the integrated Secure Element of the device. A RoT may be for example a trusted execution environment (TEE), a hardware block, a mix between hardware and software block.

The RoT can securely share data with other devices on-chip. The RoT provides an environment that is safe for creating, storing and using secrets within the SoC and on behalf of the client applications running on different host CPUs. The RoT can consist of security modules, cryptographic cores, et cetera.

An IoT device can be connected to a particular system requiring a strong authentication of the connected device to, for example, activate certain features. Such authentication typically relies on a unique per device secret embedded in the device which is used in a strong cryptographic authentication protocol setup between the device and the system. A system may for example be an IoT platform.

A device, such as an IoT device, may include a memory outside of the secure environment. For example, in the context of an integrated Secure Element (iSE), a non-volatile memory is usually shared or even managed by a non-secure context. An iSE that needs storing data such as a Java applet or data base values in the non-volatile memory typically ensures the privacy and the integrity of these data.

But as the external memory may be physically accessible or even managed by a non-secure context of a SoC, an attacker can replace a valid version of the memory by an older version or can load its own content into the memory. This can result in a circumvention of the security of the device, which is undesirable.

### SUMMARY

According to an aspect of the disclosure, a computer-implemented method is proposed for anti-replay protection of a memory of a device. The memory can be used by a secure element of the device and can be external to the secure element. The method can comprise one or more of the following steps, wherein the steps are typically performed in the device after a content of the memory is modified. The method can comprise generating device state data indicative of a state of the content of the memory. The method can further comprise transmitting the device state data to a remote system for updating an authentication key of the device stored in a data storage of the remote system and for use by the remote system in an authentication procedure. The method can further comprise providing authentication information based on the device state data from the secure element to the remote system in the authentication procedure between the device and the remote system to verify a validity of the content of the memory.

According to an aspect of the disclosure, a computer-implemented method is proposed for anti-replay protection of a memory of a device. The method can be performed in a remote system remote from the device. The method can comprise receiving device state data indicative of a state of the content of the memory from the device. The method can further comprise updating an authentication key of the device stored in a data storage of the remote system and for use by the remote system in an authentication procedure, wherein the authentication key is updated based on the received device state data. The method can further comprise receiving authentication information from a secure element of the device in the authentication procedure between the device and the remote system to verify a validity of the content of the memory, wherein the authentication information is based on the device state data in the device.

Thus, in the authentication procedure between the device and the server, the actual current state of the content of the memory can be verified in the remote system against an expected current state of the content of the memory, wherein the expected current state is stored in the remote system based on the device state data previously received from the device. Thus, when the content of the memory of the device is compromised, corrupt or otherwise different from the expected content, the device may be blocked from performing operations with the remote system.

In an embodiment the validity of the content of the memory can relate to at least one of: an authenticity of the content of the memory; an integrity of the content of the memory; and version information of the content of the memory.

In an embodiment the secure element can be one of: a protected software application running on the device; a trusted execution environment in a chipset of the device; and an integrated secure element of the device.

In an embodiment the device state data can comprise at least one of: a counter value; a data value indicative of a software version; a value representing an integrity of the memory; and data indicative of a history of past modifications of the content of the memory.

In an embodiment the authentication information can be used in the authentication procedure as secret input to a cryptographic function, wherein the cryptographic function is used to encrypt and/or sign a communication between the device and the remote system, and wherein the secret input is preferably one of: an encryption key or seed to the cryptographic function.

In an embodiment the authentication key can comprise at least one of: at least part of the device state data; a function of at least part of the device state data; and an updated version of a pre-shared authentication key computed from at least part of the device state data.

In an embodiment the device state data can comprise a monotonic counter value obtained from a monotonic counter in the device, and wherein the authentication information includes the monotonic counter value.

In an embodiment the authentication procedure can be performed as a separate step before allowing the device to perform an operation with the remote system.

In an embodiment the authentication procedure can be performed implicitly when performing an operation with the remote system as a part of a communication protocol between the device and the remote system.

According to an aspect of the invention, a device is proposed comprising a secure element and a memory usable by and external to the secure element. The device can comprise means for carrying out one or more of the above described steps.

According to an aspect of the invention, a remote system is proposed comprising a data storage. The remote system can comprise means for carrying out one or more of the above described steps.

According to an aspect of the invention, a computer program product is proposed, implemented on a computer-readable non-transitory storage medium, the computer program product comprising computer executable instructions which, when executed by a processor, cause the processor to carry out one or more of the above described steps.

According to an aspect of the invention, a computer-readable non-transitory storage medium is proposed comprising computer executable instructions which, when executed by a processor, cause the processor to carry out one or more of the above described steps.

Hereinafter, embodiments of the disclosure will be described in further detail. It should be appreciated, however, that these embodiments may not be construed as limiting the scope of protection for the present disclosure.

### BRIEF DESCRIPTION OF DRAWINGS

Embodiments will now be described, by way of example only, with reference to the accompanying schematic drawings in which corresponding reference symbols indicate corresponding parts, and in which:
FIG. 1 shows an exemplary network with devices communicatively connected to a remote system;
FIG. 2 shows an exemplary device that is communicatively connected to a remote system;
FIGs. 3-6 show flow diagrams of exemplary embodiments of processes performed by a device and a remote system.

The figures are meant for illustrative purposes only, and do not serve as restriction of the scope or the protection as laid down by the claims.

### DESCRIPTION OF EMBODIMENTS

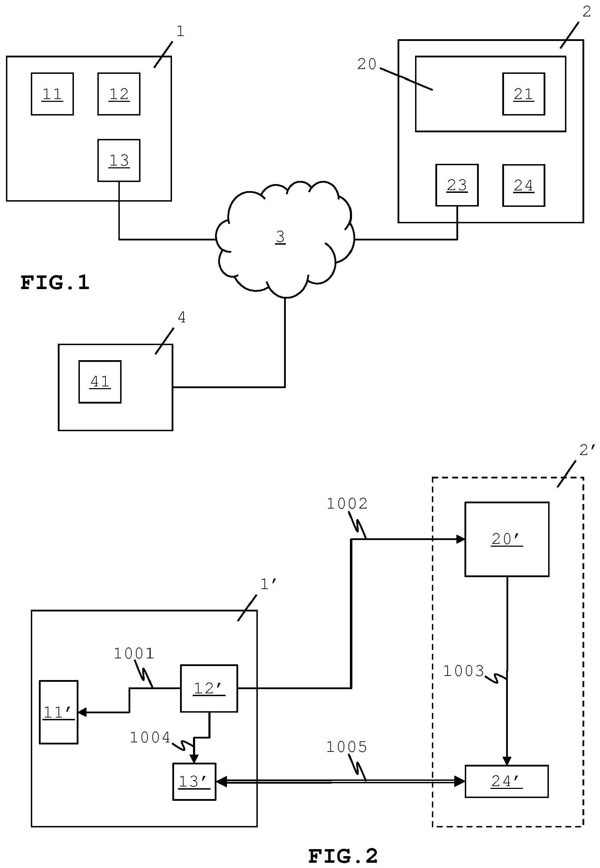

In FIG. 1 a device 1 is shown that is communicatively connected to a remote system 2 via a data network 3. The device 1 can be any client device or an IoT device.

The device 1 may include a memory 11 for storing software program portions, version information or any other data used by the device for performing operations with the remote system 2. The operations may be related to accessing information or data services, providing data from the device to the remote server, any known IoT operation, et cetera. The operations may be governed partly or completely by the content of the memory 11. The security of the operations may therefore depend on the content of the memory 11.

The memory 11 may be outside of the secure environment of the device 1. For example, in the context of an iSE, a non-volatile memory is usually shared or even managed by a non-secure context. The content of the memory 11, for example a software program stored in the memory 11, should not be compromised or altered by an attacker to influence the operations. In another example the software program should be of the correct version, for example the latest version, to ensure proper functioning of the software.

The device 1 may include a secure element 12. Examples of such secure element 12 are a protected software application running on the device 1, a trusted execution environment in a chipset of the device 1, or an integrated secure element of the device. The secure element 12 may comprise a RoT.

The device 1 may include a communications module 13. The communications module 13 may include a software agent to setup a secure communication with the remote system 2, for example using a secure communication protocol.

The remote system 2 may be implemented as a single server, a group of cooperating computers or computer elements, or as a cloud service. The remote server 2 may include a data storage 21. The data storage 21 may be a part of an authorization system 20. The remote system 2 may include a communications module 23. The communications module 23 may include a software agent to setup a secure communication with the device 1, for example using a secure communication protocol. The remote server 2 may include a secured proxy 24 for connecting the device to a further system (not shown) for performing the operations. The communications module 23 may be a part of the authentication system 20 or the secured proxy 24. It is possible that the authentication system 20 and the secured proxy 24 each have their own communications module.

FIG. 1 further shows a second device 4 including a memory 41. In this example the content of the memory 41 has been compromised by an attacker trying to get access to services provided by the remote system 2.

To enable the validity of the content of the memory to be verified, a legitimate device 1 generates device state data indicative of a state of the content of the memory after the content of the memory has changed. This change involves for example a software update, loading of new software functionality for the device 1 into the memory, or updating or loading any data in the memory for use in the operations with the remote system 2.

The validity of the content of the memory relates to for example an authenticity of the content of the memory, an integrity of the content of the memory, and/or version information of the content of the memory.

Generally, the device state data may include, but is not limited to, a counter value, a data value indicative of a software version, a value representing an integrity of the memory, and/or data indicative of a history of past modifications of the content of the memory. The device state data may be used as input for a signature based on symmetric or asymmetric cryptography depending of the secure element features.

The counter value may be a value that is incremented periodically and stored in the memory 11 of the device 1. The current counter value may be communicated to the remote system 2 with the device state data, where it may be stored in the data storage 21. When later in time the device 1 performs an operation with the remote system or any other system that is accessed via the remote system 2, the counter value stored in the remote system 2 may be verified against the counter value in the memory 11. If the counter values do not match, it may be determined that the device has been compromised. The latter may occur when device 4 tries to make use of the remote system 2.

The data value indicative of a software version may be a value indicative of a current software version of a program installed in the memory 11. The software version may be communicated to the remote system 2 with the device state data, e.g. when the software is updated or upgraded, and stored in the data storage 21. When later in time the device 1 performs an operation with the remote system or any other system that is accessed via the remote system 2, the software version stored in the remote system 2 may be verified against the software version in the memory 11. If the software versions do not match, it may be determined that the device has been compromised. The latter may occur when device 4 tries to make use of the remote system 2.

The value representing an integrity of the memory may be a value that is generated based on the content of the memory 11, e.g. a hash value generated from the entire content of the memory 11 or from a part of the content of the memory 11. The value representing an integrity may be communicated to the remote system 2 with the device state data, where it may be stored in the data storage 21. When later in time the device 1 performs an operation with the remote system or any other system that is accessed via the remote system 2, the value representing an integrity stored in the remote system 2 may be verified against a current value representing an integrity memory 11. If the values representing an integrity do not match, it may be determined that the device has been compromised. The latter may occur when device 4 tries to make use of the remote system 2.

The data indicative of a history of past modifications of the content of the memory may be a value that is generated based on previous device state data. Typically, this historical data is combined with current data to obtain the device state data. For example, a hash value may be generated from the entire content of the memory 11 or from a part of the content of the memory 11 and a previous hash value representing the content of the memory in the past. The data indicative of a history of past modifications of the content of the memory may be communicated to the remote system 2 with the device state data, where it may be stored in the data storage 21. When later in time the device 1 performs an operation with the remote system or any other system that is accessed via the remote system 2, the data indicative of a history of past modifications of the content as stored in the remote system 2 may be verified against the data indicative of a history of past modifications as stored in the memory 11. If the values do not match, it may be determined that the device has been compromised. The latter may occur when device 4 tries to make use of the remote system 2.

FIG. 2 shows an exemplary IoT device 1' that is communicatively connected to a remote system 2'. The device 1' may be similar to device 1 of FIG. 1. The remote system 2' may be similar to the remote system 2 of FIG. 1. Device 1' may include a non-volatile memory 11', an iSE 12' and a communications module 13'. FIG. 2 further shows an exemplary security platform 20' that may include an authorization system as shown in FIG. 1. The iSE 12' may be communicatively connected to the security platform 20', possibly via the communications module 13'. FIG. 2 further shows an exemplary integrated secured reverse proxy 24', which may be integrated in remote system 2'. The security platform 20' may be part of the remote system 2'.

The arrows 1001-1005 depict data flows between the various elements. With 1001 the device state may be modified. For example, with the data 1001 from the iSE 12' to the memory 11' a secure storage of a RoT may be updated due to a database modification. In 1002 the new device state may be loaded in the security platform 20', With 1003 the security platform 20' may update a communication secret function of the new device state(s). When at some later point in time the device 1' wants to make use of a service of the remote system 2', on connection setup the iSE 12'may use the RoT to generate a session key as a function of the device state(s) and communicate this to the communications module 13'. The connection between the device 1' and the remote system 2' may then be setup, wherein with 1005 the device states may be forced by the new communication secret as set with 1003 in the proxy 24'. This may prevent a replay of e.g. an old secure storage version of the RoT, e.g. an old Java applet.

The remote connected system 2, 2' may thus guarantee the life cycle of the content of the external memory 11, 11', its freshness and optionally its integrity which can be tampered either by physical or logical attacks. Preferably, each time the local memory 11 of device 1, 1' is updated, the trusted part 12, 12' of the device - e.g. a running application, a trusted execution environment or an integrated secure element - may submit a new value which represents the new version of the local memory to the remote system 2, 2' in the form of device state data.

When a new version of the local memory 11, 11' is submitted, the remote system 2, 2' may install the submitted device state data, or a secret function of the submitted device state data, into a repository of an authentication system, such as data storage 21 of authentication system 20. For example, in a DTLS server or in a 3GPP HSS server this may be implemented by loading a new version of the pre-shared authentication key computed from the submitted device state data.

The device 1, 1' may use the device state data that represents the version of the external memory during the authentication procedure with the authentication system 2, 2'. The authentication server 20 may then implicitly or explicitly verify that the correct version and/or integrity of the local memory has been used to successfully authenticate the device 1, 1'. An explicit verification may involve an authentication procedure that is performed as a separate step before allowing the device to perform an operation with the remote system. An implicit verification may involve an authentication procedure that is performed as a part of a communication protocol between the device and the remote system, e.g. by using a computed pre-shared key that will differ in case of the hash is modified.

With the authentication procedure it may be ensured that only a device 1, 1' with the correct external memory version and content is authenticated by the authentication system 20, 20'.

In an embodiment a monotonic counter may be used. The monotonic counter may be secured with the integrity value of the memory, for example in a local signature. The monotonic counter that represents the version of the memory may then be provided during the authentication or included in a secured communication within the cryptographic datagram.

The remote system 2, 2'may force using the highest received version of the counter and may prevent reversing the counter so that the monotonic property is remotely enforced.

To guarantee the freshness of the external memory, to protect against the anti-replay , the method as described above may be implemented as a transactional mechanism wherein the device 1, 1' and server 2, 2' may be synchronized in order to manager tearing, for example by implementing an odd/even selector. Hereto, the device 1, 1' may comprise two memories similar to memory 11 or memory 11'. The first memory may include a current version of the content of the memory, while the second memory may include a previous version of the content of the memory. For each of the memories device state data may be generated, enabling the remote system 2, 2' to verify the state of the previous content of the memory in case the current state is not known yet to the remote system 2, 2'. Furthermore, by receiving device state data for the current and the previous version of the content of the memory, the remote system 2, 2' is capable to determine if intermediate versions are skipped.

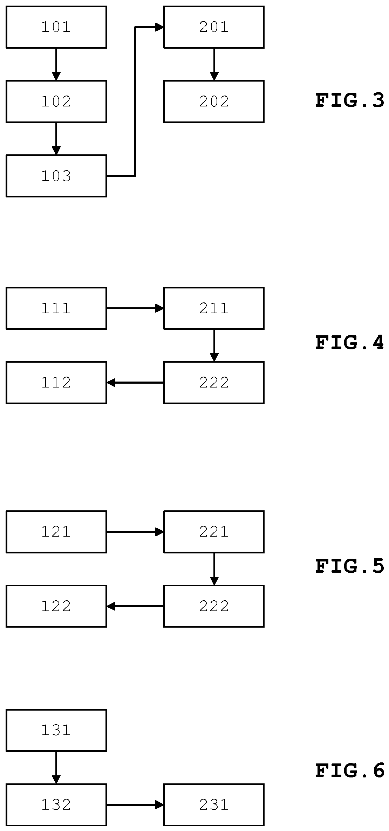

FIG. 3 shows steps of a method for anti-replay protection of a memory 11, 11' in a device 1, 1' according to an exemplary embodiment of the disclosure. In step 101 a content of the memory 11, 11' may be modified. In step 102 device state data indicative of a state of the content of the memory 11, 11' may be generated. In step 103 the device state data may be transmitted to the remote system 2, 2' for updating in step 202 an authentication key of the device 1, 1' stored in a data storage 21 of the remote system 2, 2' and for use by the remote system 2, 2' in an authentication procedure. In step 201 the device state data may be received in the remote system 2, 2'.

FIG. 4 shows steps of a method for an authentication procedure as part of the anti-replay protection of a memory 11, 11' in device 1, 1' according to an exemplary embodiment of the disclosure. The steps shown in FIG. 4 typically follow later in time after the steps shown in FIG. 3 are performed. In step 111 authentication information based on the device state data may be provided from the secure element 12, 12' to the remote system 2, 2' in the authentication procedure between the device 1, 1' and the remote system 2, 2' to verify the validity of the content of the memory. In step 211 the authentication information may be received in the remote system 2, 2'2. In step 112 the operation with the remote system 2, 2' or with a system communicatively connected to the remote system may be verified.

The authentication information may be used in the authentication procedure as secret input to a cryptographic function. This is depicted in FIG. 4 by step 121 wherein authentication information based on the device state data may be provided from the secure element 12, 12' to the remote system 2, 2'. In step 221 the authentication information may be received by a cryptographic function in the remote system 2, 2'. The cryptographic function may be used at a later time to encrypt and/or sign a communication between the device and the remote system. In step 222 the protected communication may be transmitted from the remote system 2, 2' to the device 1, 1' and in step 122 the protected communication may be received in the device 1, 1'. Only when the device 1, 1' has the correct device state date, the device 1, 1' will be able to decrypt the protected communication and/or verify the signature correctly. The secret input is preferably one of: an encryption key or seed to the cryptographic function.

In FIG. 5 another exemplary authentication procedure is shown, wherein in step 131 authentication information based on the device state data may be provided to a cryptographic function in the device 1, 1'. The cryptographic function may be used to encrypt and/or sign a communication between the device and the remote system. In step 231 the protected communication may be received in the remote system 2, 2' from the device 1, 1'. Only when the device state in the device matched the device state as stored in the remote system 2, 2', the remote system 2, 2' will be able to decrypt the protected communication and/or verify the signature correctly. The secret input is preferably one of: an encryption key or seed to the cryptographic function.

One or more embodiments of the disclosure may be implemented as a computer program product for use with a computer system. The program(s) of the program product may define functions of the embodiments (including the methods described herein) and can be contained on a variety of computer-readable storage media. The computer-readable storage media may be non-transitory storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information may be permanently stored; and (ii) writable storage media (e.g., hard disk drive or any type of solid-state random-access semiconductor memory, flash memory) on which alterable information may be stored.

## Claims

**1.** A computer-implemented method for anti-replay protection of a memory (11, 11') of a device (1, 1'), wherein the memory is used by and external to a secure element (12, 12') of the device, **characterized in that** the method comprises the following steps, wherein the steps are performed in the device after a content of the memory is modified (101):
generating (102) device state data indicative of a state of the content of the memory;
transmitting (103) the device state data to a remote system (2, 2') for updating an authentication key of the device stored in a data storage (21) of the remote system and for use by the remote system in an authentication procedure; and
providing (111) authentication information based on the device state data from the secure element to the remote system in the authentication procedure between the device and the remote system to verify (112) a validity of the content of the memory.

**2.** A computer-implemented method for anti-replay protection of a memory (11, 11') of a device (1, 1'), the method being performed in a remote system (2, 2') remote from the device, **characterized in that** the method comprises the following steps:
receiving (201) device state data indicative of a state of the content of the memory from the device;
updating (202) an authentication key of the device stored in a data storage (21) of the remote system and for use by the remote system in an authentication procedure, wherein the authentication key is updated based on the received device state data; and
receiving (211) authentication information from a secure element of the device in the authentication procedure between the device and the remote system to verify a validity of the content of the memory, wherein the authentication information is based on the device state data in the device.

**3.** The method according to claim 1 or 2, wherein the validity of the content of the memory relates to at least one of:
an authenticity of the content of the memory;
an integrity of the content of the memory; and
version information of the content of the memory.

**4.** The method according to any one of the preceding claims, wherein the secure element is one of:
a protected software application running on the device;
a trusted execution environment in a chipset of the device; and
an integrated secure element of the device.

**5.** The method according to any one of the preceding claims, wherein the device state data comprises at least one of:
a counter value;
a data value indicative of a software version;
a value representing an integrity of the memory; and
data indicative of a history of past modifications of the content of the memory.

**6.** The method according to any one of the preceding claims, wherein the authentication information is used in the authentication procedure as secret input to a cryptographic function (221), wherein the cryptographic function is used to encrypt and/or sign a communication between the device and the remote system, and wherein the secret input is preferably one of: an encryption key or seed to the cryptographic function;

**7.** The method according to any one of the preceding claims, wherein the authentication key comprises at least one of:
at least part of the device state data;
a function of at least part of the device state data; and
an updated version of a pre-shared authentication key computed from at least part of the device state data.

**8.** The method according to any one of the preceding claims, wherein the device state data comprises a monotonic counter value obtained from a monotonic counter in the device, and wherein the authentication information includes the monotonic counter value.

**9.** The method according to any one of the claims 1-8, wherein the authentication procedure is performed as a separate step before allowing the device to perform an operation with the remote system.

**10.** The method according to any one of the claims 1-8, wherein the authentication procedure is performed implicitly when performing an operation with the remote system as a part of a communication protocol between the device and the remote system.

**11.** A device (1, 1') comprising a secure element (12, 12') and a memory (11, 11') usable by and external to the secure element, wherein the device comprises means for carrying out the method according to claim 1 or any one of the claims 3-10 insofar depending on claim 1.

**12.** A remote system (2, 2') comprising a data storage (21), wherein the remote system comprises means for carrying out the method according to claim 2 or any one of the claims 3-10 insofar depending on claim 2.

**13.** A computer program product, implemented on a computer-readable non-transitory storage medium, the computer program product comprising computer executable instructions which, when executed by a processor, cause the processor to carry out the steps of the method according to any one of claims 1-10.

**15.** A computer-readable non-transitory storage medium comprising computer executable instructions which, when executed by a processor, cause the processor to carry out the steps of the method according to any one of claims 1-10.
